# EUROPEAN PATENT APPLICATION

(11) **EP 4 661 523 A1**
(43) Date of publication of application: **10.12.2025**
(21) Application number: 23919733.8
(22) Date of filing: 02.02.2023
(51) Int. Cl.: H04W 56/00, H04W 36/08, H04W 36/28

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); OKUMURA, Mamoru, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2023/003408
(87) International publication number: WO 2024/161596

(57) **Abstract**

A terminal according to one aspect of the present disclosure includes: a receiving section that receives information regarding a serving cell and a candidate cell; and a control section that uses, when a plurality of methods of acquiring timing advance corresponding to the candidate cell are supported, a method of acquiring timing advance selected based on at least one of a higher layer parameter and a certain rule, to acquire the timing advance corresponding to the candidate cell.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is assumed that, in future radio communication systems (for example, radio communication systems of Rel. 16/5G or later), communication is controlled based on inter-cell mobility with a plurality of cells including a non-serving cell or inter-cell mobility using a plurality of transmission/reception points (for example, multi-TRP (MTRP)). In inter-cell mobility, it is also assumed that a candidate cell is configured separately from a serving cell and switching/switch between the serving cell and the candidate cell is performed.

However, in a case of applying inter-cell mobility (for example, switching between a serving cell and a candidate cell, or the like), how to control UL transmission (as an example, control of timing advance or the like) is a problem. When inter-cell mobility cannot be performed appropriately, communication quality may deteriorate.

The present disclosure has been made in view of this respect, and an object of the present disclosure is to provide a terminal, a radio communication method, and a base station that enable appropriate control of communication even when inter-cell mobility is performed.

### Solution to Problem

A terminal according to one aspect of the present disclosure includes: a receiving section that receives information regarding a serving cell and a candidate cell; and a control section that uses, when a plurality of methods of acquiring timing advance corresponding to the candidate cell are supported, a method of acquiring timing advance selected based on at least one of a higher layer parameter and a certain rule, to acquire the timing advance corresponding to the candidate cell.

### Advantageous Effects of Invention

According to one aspect of the present disclosure, even when inter-cell mobility is performed, communication can be appropriately controlled.

### Brief Description of Drawings

[FIG. 1] FIG. 1A and FIG. 1B are diagrams to show examples of inter-cell mobility.
[FIG. 2] FIG. 2 is a diagram to show examples of switching between a serving cell and an additional cell by L1/L2 signaling.
[FIG. 3] FIG. 3 is a diagram to show an example of configuration examples 1 to 3 when candidate cells are supported.
[FIG. 4] FIG. 4A to FIG. 4C are diagrams to show respective examples of a case where switching with a candidate cell(s)/a candidate cell group by L1/L2 signaling is performed in configuration examples 1 to 3 when candidate cells are supported.
[FIG. 5] FIG. 5 is a diagram to show an example of timing advance groups (TAGs) to which cells included in a cell group belong.
[FIG. 6] FIG. 6 is a diagram to show an example of a MAC CE for timing advance command.
[FIG. 7] FIG. 7A and FIG. 7B are diagrams to show an example of TAG IDs configured for serving cells and candidate cells.
[FIG. 8] FIG. 8 is a diagram to show an example of configuration/definition of a TA acquisition method for each candidate cell according to a first embodiment.
[FIG. 9] FIG. 9 is a diagram to show an example of acquisition of TA of a candidate cell according to the first embodiment.
[FIG. 10] FIG. 10 is a diagram to show another example of the acquisition of TA of a candidate cell according to the first embodiment.
[FIG. 11] FIG. 11 is a diagram to show an example of configuration/definition of a reference cell for each candidate cell according to a second embodiment.
[FIG. 12] FIG. 12 is a diagram to show an example of calculation of TA based on a difference in reception timing between a candidate cell and a reference cell (synchronized) according to the second embodiment.
[FIG. 13] FIG. 13 is a diagram to show an example of calculation of TA based on a difference in reception timing between a candidate cell and a reference cell (asynchronized) according to the second embodiment.
[FIG. 14] FIG. 14 is a diagram to show an example of acquisition of TA of a candidate cell according to a third embodiment.
[FIG. 15] FIG. 15 is a diagram to show another example of the acquisition of TA of a candidate cell according to the third embodiment.
[FIG. 16] FIG. 16 is a diagram to show another example of the acquisition of TA of a candidate cell according to the third embodiment.
[FIG. 17] FIG. 17 is a diagram to show another example of the acquisition of TA of a candidate cell according to the third embodiment.
[FIG. 18] FIG. 18 is a diagram to show an example of a schematic structure of a radio communication system according to one embodiment.
[FIG. 19] FIG. 19 is a diagram to show an example of a structure of a base station according to one embodiment.
[FIG. 20] FIG. 20 is a diagram to show an example of a structure of a user terminal according to one embodiment.
[FIG. 21] FIG. 21 is a diagram to show an example of a hardware structure of the base station and the user terminal according to one embodiment.
[FIG. 22] FIG. 22 is a diagram to show an example of a vehicle according to one embodiment.

### Description of Embodiments

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information regarding quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information regarding QCL between a channel as a target (in other words, a reference signal (RS) for the channel) and another signal (for example, another RS). The TCI state may be configured (indicated) by higher layer signaling or physical layer signaling, or a combination of these.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (indicated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Inter-cell Mobility)

For NR, it is studied that one or a plurality of transmission/reception points (TRPs) (multi-TRP (MTRP)) perform DL transmission to a UE. It is also studied that the UE performs UL transmission to the one or plurality of TRPs.

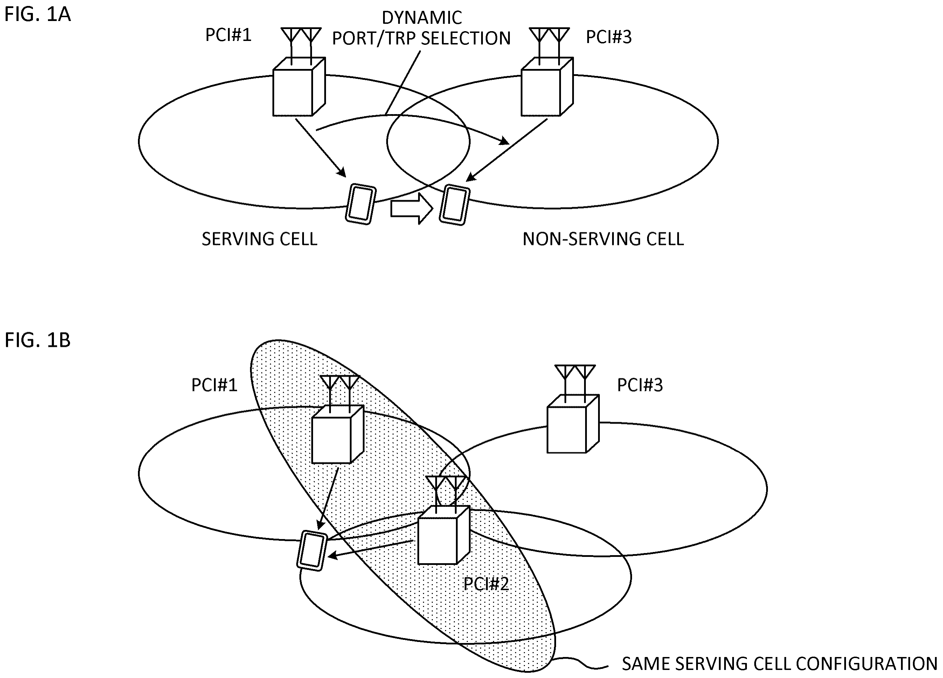

It is considered that a UE receives DL channels/DL signals from a plurality of cells/TRPs in inter-cell mobility (for example, L1/L2 inter cell mobility) (see FIGS. 1A and 1B).

FIG. 1A shows an example of inter-cell mobility with cells including a non-serving cell (for example, Single-TRP inter-cell mobility). A UE may be configured with one TRP (or a single TRP) in each cell. Here, shown is a case where the UE receives channels/signals from a base station/TRP of cell #1 being a serving cell, and a base station/TRP of cell #3 being not a serving cell (non-serving cell). For example, this corresponds to a case where the UE switches from cell #1 to cell #3 (for example, fast cell switch).

In this case, selection of a port (for example, an antenna port)/TRP or may be performed dynamically. The selection of a port (for example, an antenna port)/TRP or may be performed based on a TCI state indicated or updated by DCI/MAC CE. Here, shown is a case of supporting configuration of different physical cell IDs (for example, PCIs) for cell #1 and cell #3.

FIG. 1B shows an example of a multi-TRP scenario (for example, inter-cell mobility in a case of using multi-TRP (Multi-TRP inter-cell mobility)). A UE may be configured with a plurality of (for example, two) TRPs (or different CORESET pool indices) in each cell. Here, shown is a case where the UE receives channels/signals from TRP #1 and TRP 2. Here, also shown is a case where TRP #1 corresponds to physical cell ID (PCI) #1 and TRP #2 corresponds to PCI #2.

The multi-TRP (for example, TRPs #1 and #2) may be connected via ideal/non-ideal backhaul to exchange information, data, and the like. Each TRP of the multi-TRP may transmit the same or a different codeword (Code Word (CW)) and the same or a different layer. As one mode of multi-TRP transmission, non-coherent joint transmission (NCJT) may be employed as shown in FIG. 1B. Here, shown is a case where NCJT is performed between TRPs corresponding to different PCIs. Note that the same serving cell configuration may be applied/configured for TRP #1 and TRP #2.

It may be defined that a plurality of PDSCHs (multi-PDSCH) subjected to NCJT partially or completely overlap with respect to at least one of time and frequency domains. In other words, a first PDSCH from TRP #1 and a second PDSCH from TRP #2 may overlap in terms of at least one of time and frequency resources. The first PDSCH and the second PDSCH may be used for transmission of the same TB or may be used for transmission of different TBs.

The first PDSCH and the second PDSCH may be may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI (S-DCI, single PDCCH)) (single-master mode). The one piece of DCI may be transmitted from one TRP of the multi-TRP. A structure using one piece of DCI in multi-TRP may be referred to as single-DCI based multi-TRP (mTRP/MTRP).

The plurality of PDSCHs from the multi-TRP may be scheduled by using a plurality of respective pieces of DCI (multi-DCI (M-DCI), multi-PDCCH (multiple PDCCHs)). The plurality of pieces of DCI may be transmitted from respective TRPs of the multi-TRP. A structure using a plurality of pieces of DCI in multi-TRP may be referred to as multi-DCI based multi-TRP (mTRP/MTRP).

The UE may assume to transmit, to the different TRPs, separate CSI reports related to the respective TRPs. Such CSI feedback may be referred to as separate feedback, separate CSI feedback, and the like. In the present disclosure, "separate" may be interchangeably interpreted as "independent."

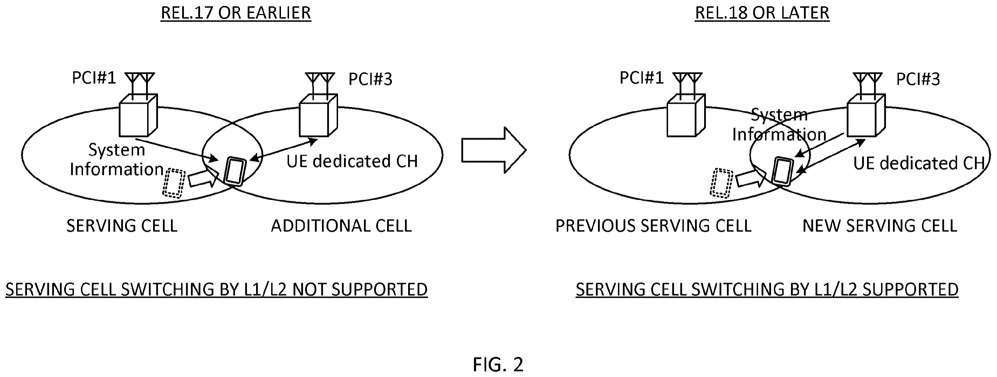

In Rel-17 NR, it is assumed that beam indication to TCI states associated with different PCIs by a MAC CE/DCI is supported. Meanwhile, in Rel-18 NR or later versions, it is assumed that serving cell switching (for example, indication of change of a serving cell to a cell having a different PCI) by L1/L2 signaling (for example, DCI/MAC CE) is supported (see FIG. 2).

FIG. 2 shows cases where a UE performs cell switching from a serving cell to an additional cell (or referred to as a candidate cell and a target cell), based on cell switch indication from a base station.

### (Candidate Cell)

It is also assumed that, in inter-cell mobility, one or a plurality of candidate cells are configured/managed for each serving cell.

For example, one or more candidate cells with information being restricted (for example, a UE is notified only of one or some of parameters) may be configured in a certain higher layer parameter (for example, ServingCellConfig) (Alt. 1). This may be configured similarly to inter-cell beam management (inter-cell BM) for existing systems (for example, Rel. 17).

Alternatively, a complete configuration (for example, ServingCellConfig) of one or more candidate cells may be configured, and the candidate cell(s) may be associated with each serving cell (Alt. 2). For example, a framework for carrier aggregation configuration (for example, CA configuration framework) or a framework for CHO (Conditional Handover)/CPC (Conditional PSCell Change) configuration may be reused.

In Alt. 1/2, activation/deactivation of a candidate cell(s) may be controlled by a MAC CE/DCI.

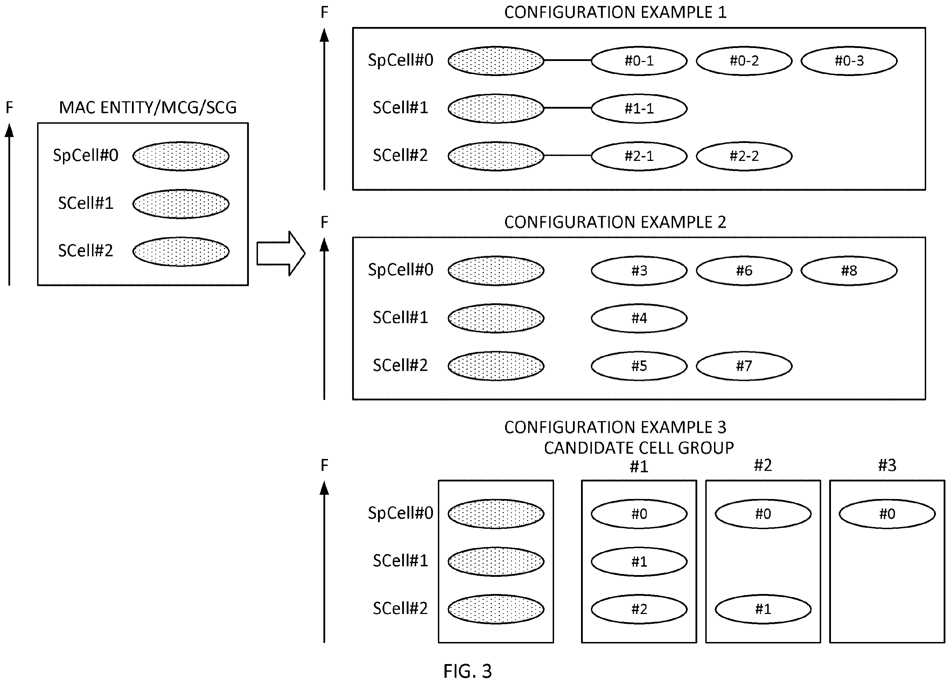

As configuration of candidate cells, at least one of configuration example 1 to configuration example 3 below may be used (see FIG. 3). Here, shown are examples of configuration/association of candidate cells (or additional cells) for serving cells/cell group when SpCell #0, SCell #1, and SCell #2 are configured as the serving cells. Configuration example 1 to configuration example 3 below are examples, and the number of cells, association for each cell, and the like are not limited to these and may be changed appropriately. Alternatively, another configuration example(s) may be supported/employed in addition to/instead of configuration example 1 to configuration example 3.

Configuration example 1 shows a case where one or more candidate cells are associated with/configured for each serving cell (see FIG. 3). Specifically, shown is a case where candidate cells #0-1, #0-2, and #0-3 are associated with SpCell #0, candidate cell #1-1 is associated with SCell #1, and candidate cells #2-1 and #2-2 are associated with SCell #2. Information regarding this association may be configured for/indicated to a UE by a base station by RRC/MAC CE/DCI.

Configuration example 2 shows a case where candidate cells are associated with/configured for a MAC entity/MCG/SCG (see FIG. 3). Specifically, shown is a case where candidate cells #3 to #8 are associated with the MAC entity/MCG/SCG. In this case, instead of a candidate cell(s) being associated with each serving cell, the candidate cells are configured for the MAC entity or cell group (for example, an MCG/SCG). Information regarding a candidate cell(s) to be configured for each cell may be configured for/indicated to a UE by a base station by RRC/MAC CE/DCI.

In configuration example 3, one or more candidate cell groups may be configured (see FIG. 3). Specifically, shown is a case where candidate cell group #1 including candidate cells #0 to #2, candidate cell group #2 including candidate cells #0 and #1, and candidate cell group #3 including candidate cell #0 are configured. Each candidate cell group includes one or more candidate cells. Each candidate cell included in the candidate cell group may be associated with at least one serving cell. Information regarding the candidate cell(s) may be configured for/indicated to a UE by a base station by RRC/MAC CE/DCI.

In existing systems (for example, Rel. 17), L1 beam indication for a TCI state related to an additional PCI (or an additional cell) (for example, indication by a TCI state field of DCI) is supported.

It is assumed, in Rel. 18 or later versions, that a new L1/L2 signal (for example, DCI/MAC CE) indicating switching of a serving cell (for example, serving cell switch) is supported. It is assumed that, as the indication, at least one of implicit indication and explicit indication is supported. The implicit indication may mean that a certain CORESET is updated to a TCI state associated with an additional PCI by a MAC CE, for example. The explicit indication may mean that cell switching is directly indicated by DCI/MAC CE.

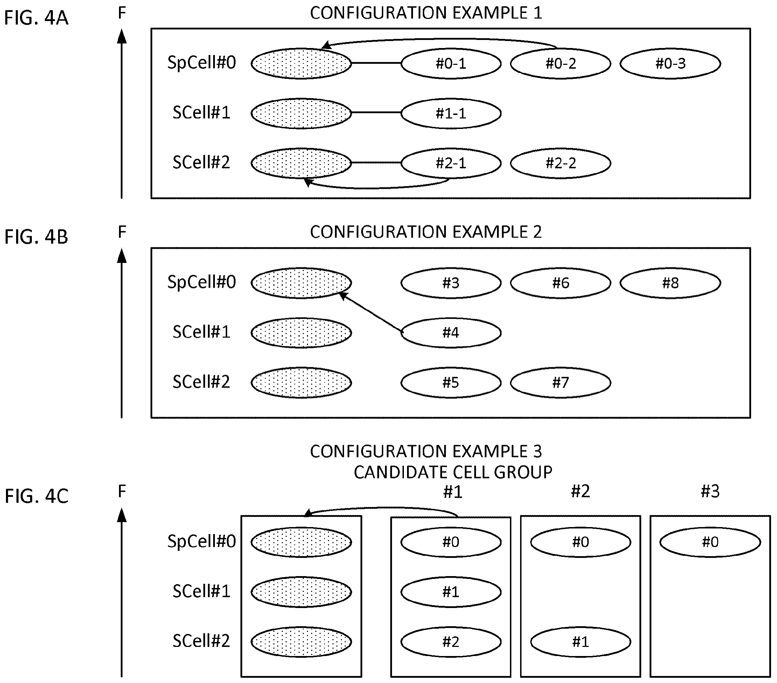

For example, in configuration example 1 of candidate cells, a certain candidate cell may be indicated as a serving cell (or indicated for switching with a serving cell) via L1/L2 signaling (for example, cell switch indication/cell switch command). FIG. 4A shows a case where candidate cell #0-2 turns to be an SpCell of an MCG/SCG (SpCell #0 and candidate cell #0-2 are switched) by L1/L2 signaling. Also shown is a case where candidate cell #2-1 turns to be an SCell of an MCG/SCG (SCell #2 and candidate cell #2-1 are switched) by L1/L2 signaling.

Alternatively, in configuration example 2 of candidate cells, a certain candidate cell may be indicated as a serving cell (or indicated for switching with a serving cell) via L1/L2 signaling. FIG. 4B shows a case where candidate cell #4 turns to be an SpCell of an MCG/SCG (SpCell #0 and candidate cell #4 are switched) by L1/L2 signaling.

Alternatively, in configuration example 3 of candidate cells, a certain candidate cell group (or one or more candidate cells included in the certain candidate cell group) may be changed/updated to a serving cell group via L1/L2 signaling. FIG. 4C shows a case where candidate cell group #1 (or candidate cells #0 to #2 included in candidate cell group #1) turns to be a serving cell group (or the serving cell group and candidate cell group #1 are switched) by L1/L2 signaling.

### (Timing Advance Group)

When a plurality of TRPs are used, there are some cases where the distance between a UE and each TRP is different. The plurality of TRPs may be included in the same cell (for example, a serving cell). Alternatively, among the plurality of TRPs, a certain TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

A UE may employ timing advance for each timing advance group (TAG) (multiple timing advances) configured in advance to perform timing control for UL transmission.

When the multiple timing advances is employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG (for example, serving cells configured with UL). A timing advance group including an SpCell of a MAC entity may be referred to as a primary timing advance group (PTAG), and a TAG other than the PTAG may be referred to as a secondary timing advance group (STAG). The maximum number of TAGs may be X (for example, X = 4) for each cell group (MCG/SCG).

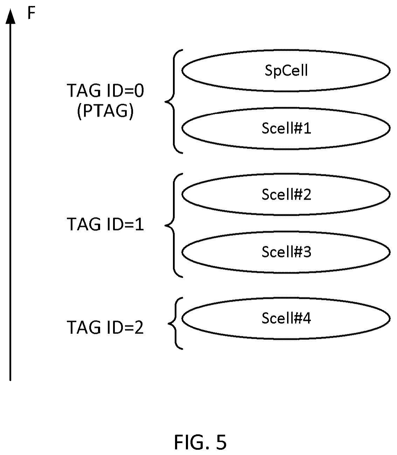

In existing systems (for example, Rel-16 NR), configuration of four TAGs at maximum (for example, MCG/SCG) is supported for each cell group (see FIG. 5). FIG. 5 shows a case where three TAGs are configured for a cell group including an SpCell and SCells #1 to #4. Here, shown is a case where the SpCell and SCell #1 belong to a first TAG (PTAG or TAG #0), SCell #2 and SCell #3 belong to a second TAG (TAG #1), and SCell #4 belongs to a third TAG (TAG #2).

A UE may be notified of a timing advance command (TA command) by using a MAC control element (for example, a MAC CE). The TA command is a command that indicates an uplink channel transmission timing value and is included in the MAC control element. The TA command is signaled from a radio base station to the UE on a MAC layer. The UE controls a certain timer (for example, a TA timer), based on reception of the TA command.

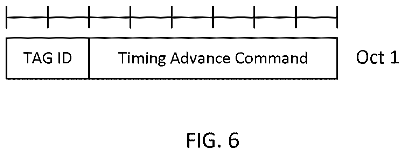

A MAC CE for timing advance command may have a structure including a field for timing advance group index (for example, TAG ID) and a field for timing advance command (see FIG. 6). The TAG ID field is used for indication of the TAG ID of an addressed TAG. The timing advance command field may indicate an index value T_{A} (0, 1, 2, ... 63) to be used for control of the amount of timing adjustment to be applied by the MAC entity.

A parameter corresponding to each TAG ID may be configured by a higher layer parameter. For example, a parameter such as a time alignment timer (for example, timeAlignmentTimer) corresponding to each TAG ID may be configured. Alternatively, a TAG ID may be configured for each serving cell by a higher layer parameter (for example, tag-ID included in ServingCellConfig). Note that each TAG ID/parameter may be updated by a MAC CE after being configured by a higher layer parameter.

The time alignment timer may be maintained for UL time alignment. In Rel. 17, a time alignment timer may be configured/associated for each TAG. When the UE has received a MAC CE for timing advance command (for example, a TAC MAC CE), the UE starts or restarts a time alignment timer related to each indicated timing advance group (for example, TAG).

When a MAC entity receives the TAC MAC CE, and a certain value (N_{TA}) is maintained for the indicated TAG, the MAC entity uses the timing advance command for the indicated TAG or starts or restarts the time alignment timer related to the indicated TAG. The certain value (N_{TA}) may be timing advance between DL and UL.

Operation when the time alignment timer expires may be defined separately for a PTAG and an STAG. Note that a timing advance group (TAG) including an SpCell of a MAC entity may be referred to as a primary timing advance group (PTAG), and a TAG other than the PTAG may be referred to as a secondary timing advance group (STAG).

For example, in Rel. 17, certain operation for PTAG is employed when a timing advance timer corresponding to a PTAG expires, and certain operation for STAG may be employed when a timing advance timer for STAG expires.

For example, when such a time alignment timer expires, the following operation (for example, the certain operation for PTAG/certain operation for STAG) may be performed.

### {Certain Operation for PTAG}

In a case where the time alignment timer is associated with a PTAG,
- flush all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

### {Certain Operation for STAG}

In a case where the time alignment timer is associated with an STAG, for all serving cells belonging to the TAG,
- flush all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.

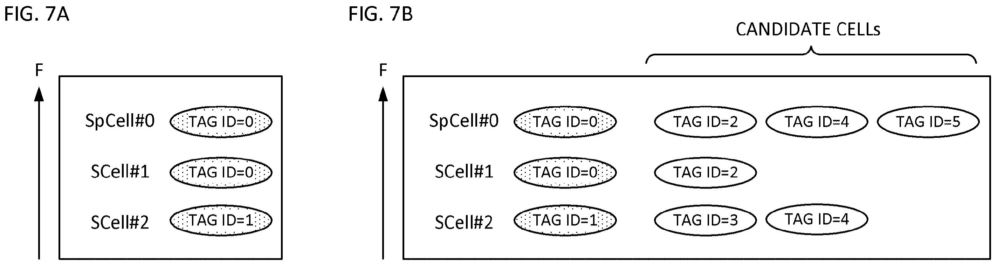

When a candidate cell(s) is configured/defined, it may be supported to control communication in consideration of timing advance (TA) corresponding to each candidate cell. For example, as described above, each candidate cell may be associated with a TAG (see FIGS. 7A and 7B). FIG. 7A shows an example of a configuration of TAGs of respective cell groups (or a TAG ID configuration) of an existing system (for example, Rel. 17 or previous versions), and FIG. 7B shows an example of a configuration of TAG IDs for respective candidate cells.

When candidate cells are configured/applied/supported, it is assumed that different serving cells/different candidate cells are associated with the same TAG as shown in FIG. 7B. A TAG of each candidate cell may be indicated by a base station or may be determined based on TA of the candidate cell acquired by a UE.

It is also considered that a UE performs, for UL transmission with a candidate cell (for example, a candidate cell for which indication of switching to a serving cell has been made), the UL transmission in consideration of TA corresponding to the candidate cell. When the TA of the candidate cell is considered, the UE needs to perform acquisition of TAs of candidate cells (for example, TA acquisition of candidate cells).

As acquisition of TA of a candidate cell, a plurality of TA acquisition methods are conceivable such as TA acquisition using a RACH (for example, RACH-based solutions) and TA acquisition using no RACH (RACH-less solutions). A TA acquisition method may be interpreted as a TA acquisition scheme, a TA acquisition type, or a TA acquisition procedure. In the present disclosure, TA acquisition, TA measurement, TA calculation, TA computation, and TA determination may be interchangeably interpreted.

For example, a UE may transmit a RACH indicated/triggered by a PDCCH (for example, a PDCCH order RACH) to a candidate cell, to acquire TA of the candidate cell. Information regarding the TA of the candidate cell (for example, a TA value) may be included in a response signal (for example, a RAR) for the RACH. The RAR may be transmitted from a serving cell or may be transmitted from the candidate cell. Alternatively, TA of a candidate cell may be acquired by using a RACH triggered by a UE or a RACH triggered from a network in a higher layer. The PDCCH order may be triggered only by a source cell (or the serving cell).

Alternatively, a UE may transmit a signal other than a RACH, to a candidate cell to acquire TA of the candidate cell. The information regarding the TA (for example, the TA value) of the candidate cell may be indicated to the UE by a base station. As the signal other than a RACH, an SRS may be applied, for example.

Alternatively, a UE may measure/calculate/acquire TA for a candidate cell, based on a DL signal (for example, a downlink reference signal) transmitted from each cell (for example, candidate cell/serving cell). A method in which a UE acquires TA of a candidate cell, based on a DL signal(s) transmitted from one or more cells may be referred to as UE based TA measurement.

In UE based TA measurement, a downlink reference signal may be a certain DL signal (for example, a synchronization signal block (for example, SSB)/CSI-RS or the like). For example, the UE may measure a difference/gap in reception timing between DL signals from a plurality of cells (or two cells) to acquire TA of a candidate cell.

The plurality of cells may include a cell to be a reference (for example, a serving cell). In this case, based on reception timing of a reference cell (and a TA value of the reference cell) and a difference in timing (for example, T) between the reference cell and a candidate cell, the UE may calculate TA necessary for the candidate cell. The UE may use a timing advance command (TAC) transmitted from the base station, to acquire the TA of the candidate cell.

As described above, it is assumed that a candidate cell(s) is configured/applied/supported and a UE acquires TA of each candidate cell. However, a problem is how to perform acquisition of TA of a candidate cell in such a case.

For example, a problem is, when a plurality of methods are supported as methods of acquiring TA of a candidate cell, which method to apply.

Alternatively, a problem is, when a cell (for example, a candidate cell) configured/determined to perform UE based TA measurement is asynchronized (or is an asynchronized network), how to control acquisition of TA of the cell.

Alternatively, a problem is, for a cell (for example, a candidate cell) configured/determined to perform UE based TA measurement, when a switch command indicating switching to the candidate cell is transmitted to a terminal, how to control application/acquisition/indication of a TA value after the switching. For example, a problem is, when information regarding TA is included in a switch command, which one to use between TA acquired by UE based TA measurement after switching and TA indicated by the switch command.

Alternatively, a problem is how to control a method of acquiring a TA value obtained based on UE based TA measurement (for example, a TA value of a candidate cell). For example, a problem is whether the method is to be applied to the first UL transmission after cell switch indication/cell switch command or to be applied to a plurality of UL transmissions after cell switching.

As described above, when a candidate cell(s) is configured/applied/supported and acquisition of TA of a candidate cell by a UE is supported, how to control TA acquisition of a candidate cell is not sufficiently studied. Unless acquisition of TA of a candidate cell is appropriately controlled, UL transmission timing cannot be appropriately controlled, which may degrade communication quality.

Hence, the inventors of the present invention focused on acquisition of TA of a candidate cell (or an additional cell, target cell) being supported, studied a control method when the acquisition of TA of the candidate cell is supported, and came up with the idea of the present embodiment.

Embodiments according to the present disclosure will be described in detail with reference to the drawings as follows. Note that the aspects (for example, cases) below may each be employed individually, or may be employed in combination of at least two.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or a combination of Radio Resource Control (RRC) signaling, Medium Access Control (MAC) signaling, broadcast information, another message (for example, a message from a core network such as a positioning protocol (for example, NR Positioning Protocol A (NRPPa)/LTE Positioning Protocol (LPP) message), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the following embodiments, a "plurality of" and "two" may be interchangeably interpreted. A "TAG" and a "TAG ID" may be interchangeably interpreted. A "cell," a "CC," and a "carrier" may be interchangeably interpreted. In the following embodiments, a "calculation," "computation," and "acquisition" may be interchangeably interpreted.

The following description may be applied in inter-cell mobility (for example, L1/L2 inter cell mobility) or may be applied in communication control other than inter-cell mobility. L1/L2 inter-cell mobility may be interpreted as at least one of cell switching, cell switch, and cell change.

### (Radio Communication Method)

### <First Embodiment>

In a first embodiment, an example of timing advance acquisition (TA acquisition) in a case where a plurality of a method of acquiring TA of a candidate cell are supported will be described.

In the present disclosure, TA acquisition (or acquired TA) may mean initial TA (or TA acquired first) or any other TA acquisition. The methods of TA acquisition may include at least two of a first method using a RACH, a second method using UE based TA measurement, and a third method other than these, for example.

The UE may receive information regarding a serving cell(s) and information regarding a candidate cell(s). The information regarding a serving cell(s) and the information regarding a candidate cell(s) may be configured for/indicated to a UE by a base station by RRC/MAC CE/DCI. The information regarding a serving cell(s) may include information regarding a cell ID(s) configured for the serving cell(s) and the like. The information regarding a candidate cell(s) may include information regarding a cell ID(s) of the candidate cell(s) (for example, a cell(s) being a candidate(s) for switching to a serving cell) and the like. In the present disclosure, a serving cell may be interpreted as a serving cell group, a source cell, or a source cell group.

The information regarding a serving cell(s)/information regarding a candidate cell(s) may include information regarding association between the serving cell(s) and the candidate cell(s). For example, a candidate cell(s) related to a given serving cell may be indicated to a UE. Alternatively, a UE may determine association between a serving cell(s) and a candidate cell(s), based on a frequency (frequencies) corresponding to a serving cell(s) and a frequency (frequencies) corresponding to a candidate cell(s) .

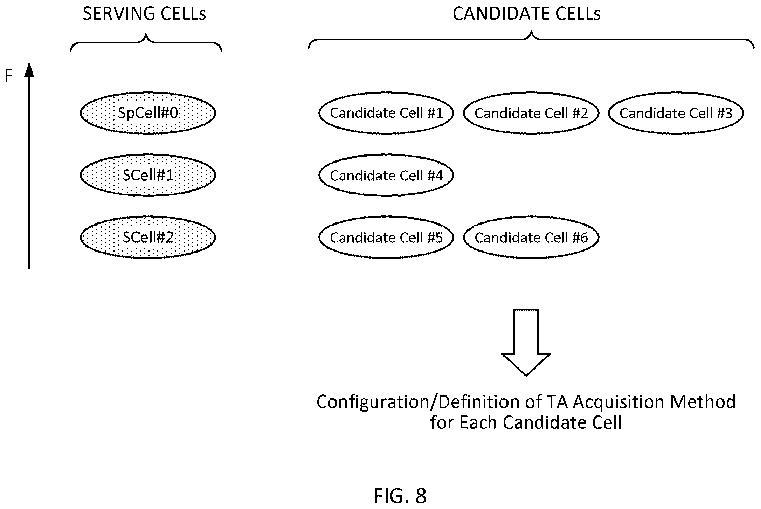

In the following description, a case where SpCell #0, SCell #1, and SCell #2 are configured as serving cells and candidate cells #1 to #6 are configured as candidate cells is given as an example for description (see FIG. 8). However, the configuration of serving cells/candidate cells is an example and is not restrictive.

### {Option 1-1}

A method of acquiring TA of a candidate cell may be configured for a terminal by a base station by a higher layer parameter. For example, the method of acquiring TA of a candidate cell may be configured separately for each candidate cell. Alternatively, the method of acquiring TA of a candidate cell may be configured separately in units of a plurality of candidate cells (or a candidate cell group/set of candidate cells). For example, in a case shown in FIG. 8, a TA acquisition method may be configured separately for each of candidate cells #1 to #6. Alternatively, a common TA acquisition method may be configured for candidate cells #1 to #6. Alternatively, a TA acquisition method may be configured for each of one or some candidate cells of candidate cells #1 to #6 (for example, candidate cells #1 to #3/candidate cell #4/candidate cells #5 and #6).

Alternatively, the method of acquiring TA of a candidate cell may be configured separately for each frequency (or frequency range/CC/band). Alternatively, the method of acquiring TA of a candidate cell may be configured separately for each timing advance group (for example, TAG). Alternatively, the method of acquiring TA of a candidate cell may be configured commonly for corresponding serving cells. For example, a common TA acquisition method may be configured for one or more candidate cells corresponding to a given serving cell.

When UE based TA measurement is configured as TA acquisition for a given candidate cell, a UE may use at least one of option 1-1-1 and option 1-1-2 below to perform TA acquisition.

### <<Option 1-1-1>>

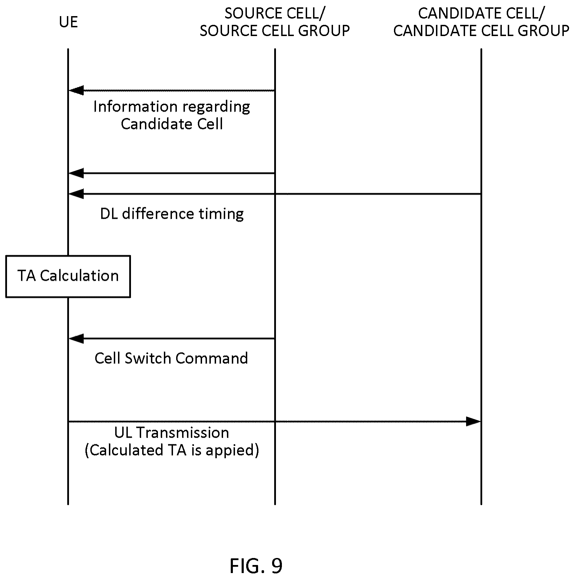

A UE may perform reception/measurement of a DL signal(s) transmitted from one or more cells including at least a candidate cell, thereafter calculate TA of the candidate cell, and apply the obtained TA to UL transmission (see FIG. 9).

For example, the UE performs, for a given cell (for example, a candidate cell), reception/measurement of the DL signal(s) transmitted from the one or more cells including at least the candidate cell to calculate TA of the candidate cell, before a cell switch indication (for example, reception of a cell switch command (for example, a cell switch command)). After reception of a cell switch command for the candidate cell, the UE may then apply the calculated TA to UL transmission (for example, UL transmission to a candidate cell for which switching to a serving cell is indicated by the cell switch command). In the present disclosure, a cell switch command may be interpreted as a cell switch indication. A cell switch indication/cell switch command may be transmitted by at least one of DCI and a MAC CE.

Consequently, UL transmission based on appropriate TA can be performed for a cell for which switching from a candidate cell to a serving cell is indicated by a cell switch command (or a cell switch indication). By acquiring TA of a candidate cell before reception of a cell switch command, a UE can immediately apply TA obtained for UL transmission of the candidate cell, after cell switching.

### <<Option 1-1-2>>

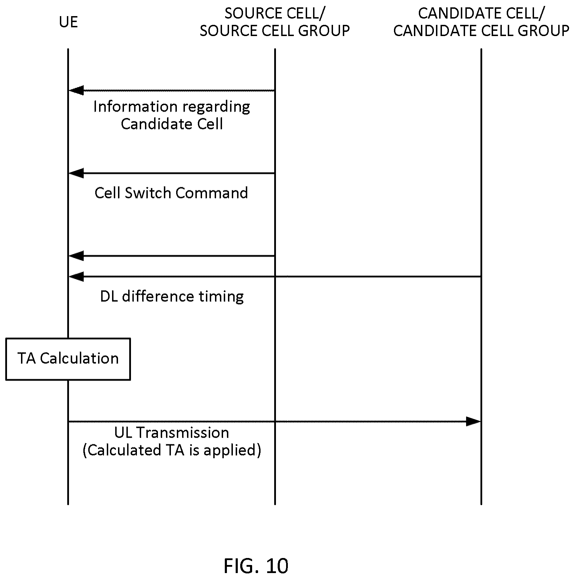

A UE may perform, after having received a cell switch command for a candidate cell, reception/measurement of a DL signal(s) transmitted from one or more cells including at least the candidate cell targeted for switching, to calculate TA of the candidate cell (see FIG. 10).

As described above, by performing, after having received a cell switch command, measurement/calculation of TA of a candidate cell targeted for switching to a serving cell, the number of cells for which a UE performs measurement/calculation of TA can be reduced. Consequently, an increase in load of the UE due to the measurement/calculation of TA can be suppressed.

Note that, in option 1-1-1/option 1-1-2, a candidate cell for which acquisition of TA is performed before reception of a cell switch command or a candidate cell for which acquisition of TA is performed after reception of a cell switch command may be configured for a UE. Consequently, timing at which acquisition of TA is performed for each candidate cell can be controlled flexibly.

### {Option 1-2}

A UE may determine a method of acquiring TA of a candidate cell, based on one or more certain conditions/rules. For example, when a certain condition/rule is satisfied, the UE may apply a specific TA acquisition method (for example, UE based TA measurement) for a given candidate cell.

As TA acquisition for a given cell, at least one of option 1-2-1 and option 1-2-2 below may be applied.

### <<Option 1-2-1>>

A specific TA acquisition method (for example, UE based TA measurement) may be applied to one or some candidate cells (or a specific candidate cell(s)). The UE may apply UE based TA measurement to one or some candidate cells (or a specific candidate cell(s)) at default. Note that UE based TA measurement may be interpreted using another TA acquisition method.

One or some candidate cells (or a specific candidate cell(s)) may be a candidate cell(s) for which a specific parameter/condition/usage is configured. For example, one or some candidate cell(s) (or a specific candidate cell(s)) may be at least one of a candidate cell for which L1 beam measurement/reporting is configured and a candidate cell having the same frequency as that of a current serving cell (for example, an SpCell).

### <<Option 1-2-2>>

When a cell switch command does not include information regarding TA, a specific TA acquisition method (for example, UE based TA measurement) may be applied to a target candidate cell. Information regarding TA may be interpreted as a TA value or a TA value field (for example, a TA value field). For example, when the UE has received a cell switch command for a given candidate cell, the UE may apply UE based TA measurement for a target candidate cell targeted for the switching.

The UE may report UE capability information regarding whether or not to support UE based TA measurement. Alternatively, the UE may report capability information regarding the maximum value of the number of cells/number of TAGs for which the UE can perform TA measurement/calculation, for each frequency/MCG/SCG/UE.

### {Variations}

A plurality of TA acquisition methods may be configured by RRC. When TA is indicated/reported, a TA acquisition method associate with the TA may be applied. For example, when a plurality of TA acquisition methods are configured/supported, and a PDCCH order based PRACH is triggered, TA acquisition for a candidate cell may be performed based on a PDCCH order. Alternatively, when of a plurality of TA acquisition methods are configured/supported, and a UE reports a TA value, based on UE based TA measurement, TA acquisition for a candidate cell may be performed based on UE based TA measurement. In this case, UE reporting (for example, explicit reporting) of TA for UE based TA measurement may be required.

### <Second Embodiment>

In a second embodiment, an example of measurement of a difference in reception timing between DL signals transmitted from a plurality of cells including a candidate cell/TA calculation will be described.

The second embodiment may be preferably applied when UE based TA measurement is employed as a TA acquisition method. Apparently, this is not restrictive. The second embodiment may be applied in combination of contents described in the first embodiment (for example, partially/entirely) appropriately.

When a difference in DL reception timing between a candidate cell and another cell (for example, DL RX timing difference) is measured, a reference cell may be configured/defined. A reference cell may be interpreted as a specific cell. A reference cell may be a specific cell or a cell for which a TA value is indicated/acquired, for example. A reference cell may be defined in a specification or configured for/indicated to a UE by a base station by RRC/MAC CE/DCI. For example, a reference cell may be determined based on at least one of option 2-1 to option 2-3 below.

### {Option 2-1}

A specific serving cell (for example, an SpCell) of current serving cells may be employed as a reference cell. In this case, the specific cell (for example, the SpCell) may be used as a reference cell to be used for measurement of a difference in timing between a plurality of candidate cells (for example, all candidate cells in an MCG/SCG).

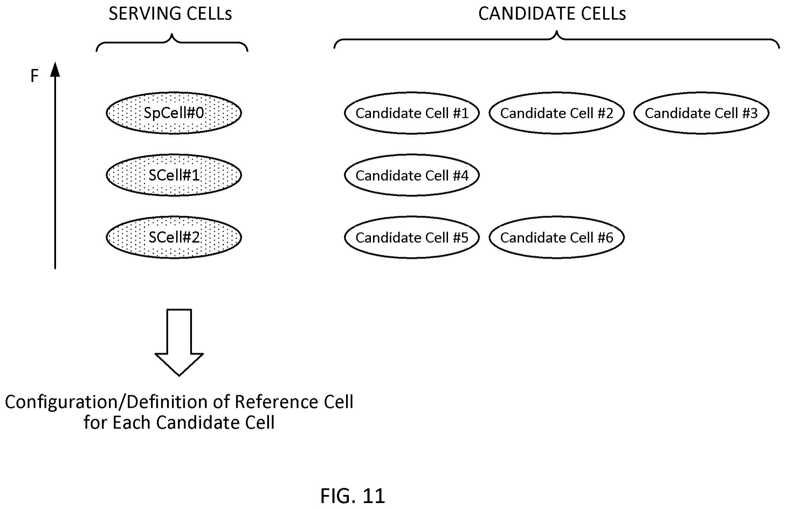

For example, in a case where SpCell #0, SCell #1, and SCell #2 are configured as serving cells and candidate cells #1 to #6 are configured as candidate cells (see FIG. 11), SpCell #0 may be defined/configured as a reference cell. In this case, a difference in timing between SpCell #0 as a reference cell and each of candidate cells #1 to #6 may be measured to perform TA acquisition for each of candidate cells #1 to #6. Note that the configuration of serving cells/candidate cells shown in FIG. 11 is an example and is not restrictive.

Note that the specific serving cell is not limited to an SpCell and may be another serving cell (for example, an SCell).

### {Option 2-2}

A reference cell may be configured/defined for a candidate cell for each given unit. For example, a reference cell may be configured/defined for a candidate cell(s) for each frequency (or CC, band, frequency range). As an example, a serving cell of each frequency may be configured/defined as a reference cell.

For example, in a case where SpCell #0, SCell #1, and SCell #2 are configured as serving cells and candidate cells #1 to #6 are configured as candidate cells (see FIG. 11), the reference cell of candidate cells #1 to #3 is configured to be SpCell #0, the reference cell of candidate cell #4 is configured to be SCell#1, the reference cell for candidate cells #5 and #6 may be configured to be SCell #2.

### {Option 2-3}

A reference cell may be configured/defined separately for each candidate cell. Alternatively, a reference cell may be configured/defined commonly in units of a plurality of candidate cells (for example, all candidate cells, one or some of candidate cells, a set of candidate cells, or a candidate cell group).

For example, in a case where SpCell #0, SCell #1, and SCell #2 are configured as serving cells and candidate cells #1 to #6 are configured as candidate cells (see FIG. 11), a reference cell corresponding to each of candidate cells #1 to #6 may be configured separately.

Note that a reference cell may be selected from candidate cells (for example, candidate cells for each of which TA is acquired).

### {TA Calculation Based on Difference in DL Reception Timing}

A UE may perform TA calculation for a candidate cell in consideration of a difference (for example, delta) in reception timing between DL signals transmitted from the candidate cell and another cell (for example, a reference cell). For example, a UE may calculate TA of the candidate cell (for example, TA_ca) in consideration of TA of the reference cell (for example, TA_ref) and a timing difference (for example, delta) measured in DL reception. As an example, the TA of the candidate cell (for example, TA_ca) may be obtained according to TA_ca = TA_ref + 2 × delta.

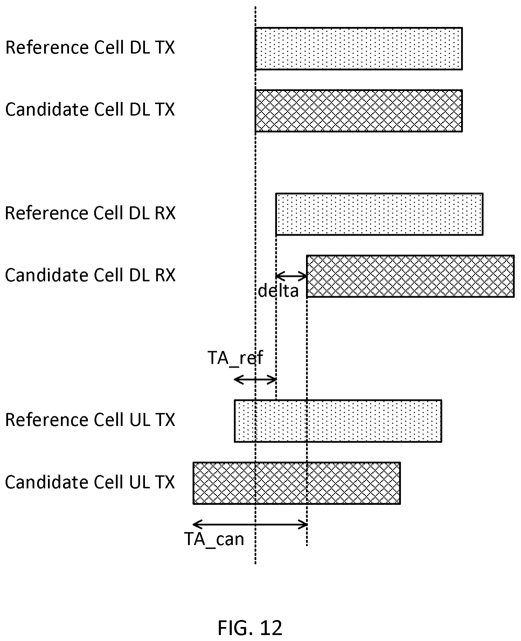

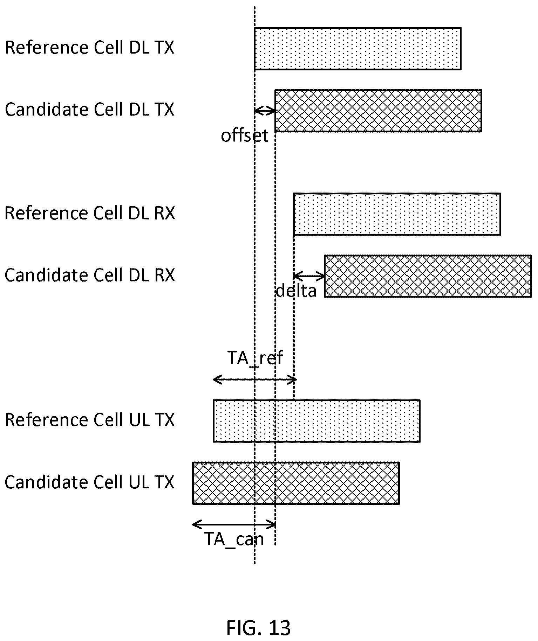

Different parameters may be applied to TA calculation in a case where the reference cell and the candidate cell are synchronized (FIG. 12) and TA calculation in a case where the reference cell and the candidate cell are asynchronized (FIG. 13). For example, a certain parameter (or a certain offset) may be considered only in the case where the reference cell and the candidate cell are asynchronized. The certain parameter (or the certain offset) may be an offset considering a difference in reception timing due to asynchronization, for example.

The certain offset (or timing offset) for DL reception between each candidate cell and the reference cell may be configured separately for each candidate cell. In a case of asynchronized cells, a value other than 0 may be configured for the certain offset. In a case of synchronized cells, the certain offset may be configured at 0, or the certain offset need not be indicated/configured.

The UE may determine TA of the candidate cell, based on the TA of the reference cell in consideration of both the certain offset and the difference in measured DL reception timing. For example, for asynchronized cells (for example, when the candidate cell and the reference cell are asynchronized), the UE may calculate TA of the candidate cell (for example, TA_ca) in consideration of the certain offset, the TA of the reference cell (for example, TA_ref), and a timing difference (delta) measured in DL reception. As an example, the TA of the candidate cell (for example, TA_ca) may be obtained according to TA_ca = TA_ref - 2 × certain offset + 2 × delta (or TA_ca = TA_ref - certain offset + 2 × delta).

UE capability information regarding whether to support UE based TA measurement for inter-cell synchronization/asynchronization may be defined. UE capability related to the number of synchronized/asynchronized cells for which UE based TA measurement is performed may be defined.

### {Reference Cell After Cell Switch Command}

In TA acquisition, when a reference cell is a serving cell or an SpCell, and the serving cell or the SpCell is switched/changed by a cell switch command, a reference cell after the cell switching may be determined based on at least one of Alt. 2-1 to Alt. 2-3 below.

### <<Alt. 2-1>>

When a cell switch command is received, and a current serving cell (for example, an SpCell) is changed, a reference cell need not be changed. In this case, a UE may always calculate TA of a candidate cell, based on a reference cell configured by RRC.

### <<Alt. 2-2>>

When a cell switch command is received, and a current serving cell (for example, an SpCell) is changed, a reference cell may be changed to a new serving cell (for example, a new SpCell). In other words, the reference cell may also be changed according to cell switching. In this case, the UE may recalculate a difference in timing between the candidate cell and a new reference cell (or a reference cell after change)/certain offset and apply the new timing difference/certain offset to TA derivation.

### <<Alt. 2-3>>

When a cell switch command is received, and a current serving cell (for example, an SpCell) is changed, a reference cell may be updated by RRC/MAC CE. In this case, a difference in DL timing between the candidate cell and a new reference cell (or a reference cell after change)/certain offset may be updated by RRC/MAC CE.

### <Third Embodiment>

In a third embodiment, an example of UE operation in a case where switching to a candidate cell is indicated by a cell switch command will be described.

The third embodiment will be described by using, as an example, a case where UE based TA measurement is configured as a method of acquiring TA of a given candidate cell, but this is not restrictive. The third embodiment may be applied to a PDCCH order PRACH for a given candidate cell for which UE based TA measurement is configured. The third embodiment may be applied in combination of contents described in the first embodiment/second embodiment (for example, partially/entirely) appropriately.

For a candidate cell configured/determined to be performed with UE based TA measurement, a UE may apply at least one of option 3-1 and option 3-2 below when a cell switch command indicating switching to the candidate cell is transmitted. The cell switch command may be transmitted by a MAC CE (for example, a cell switch command MAC CE).

### {Option 3-1}

A configuration of not including information regarding TA (for example, a TA value) in a cell switch command MAC CE may be supported.

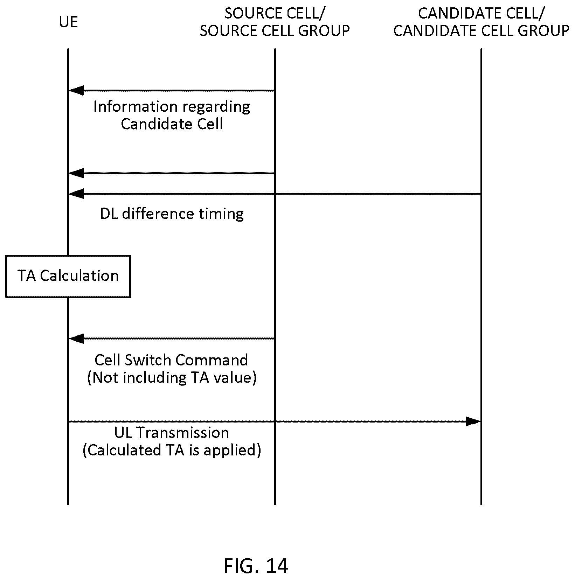

For example, a UE may expect/assume that no TA value is included in a cell switch command MAC CE for a given candidate cell. When the UE has TA corresponding to the candidate cell (for example, when the UE has already calculated/acquired the TA), the UE may control UL transmission to the candidate cell (for example, the candidate cell switched to a serving cell), based on the TA (see FIG. 14).

For example, when the UE has already acquired TA for a given candidate cell by UE based TA measurement and has received a cell switch command MAC CE for the given candidate cell (for example, a MAC CE not including any TA value), the UE may apply the TA obtained by UE based TA measurement to UL transmission to a candidate cell after cell switching.

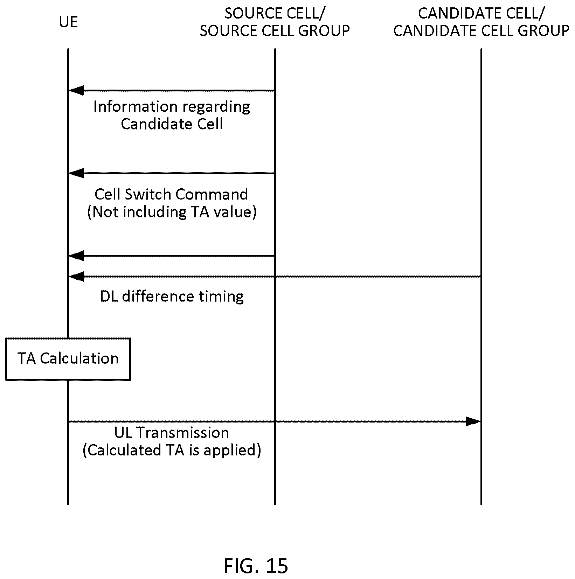

Alternatively, when the UE has not acquired TA for a given candidate cell by UE based TA measurement and has received a cell switch command MAC CE for the given candidate cell (for example, a MAC CE not including any TA value), the UE may apply UE based TA measurement to calculate/acquire TA corresponding to the candidate cell and thereafter apply the TA to UL transmission to the candidate cell (see FIG. 15).

In a MAC CE, an individual field indicating whether a field (for example, a TA value field) is present may be present. For each of some other fields of the cell switch command MAC CE, an individual field indicating whether the field is present may be present.

The some other fields may include at least one of the following fields.
- field indicating activation/deactivation of a serving cell/candidate cell
- field indicating activation of a TCI state of a target serving cell/target candidate cell
- field indicating triggered aperiodic CSI-RS resource indication/CSI-RS resource set ID/CSI reporting setting ID
- field indicating triggered aperiodic SRS resource set ID

### {Option 3-2}

Information regarding TA (for example, a TA value) in a cell switch command MAC CE may be included. In this case, a UE may apply at least one of option 3-2-1 to option 3-2-3 below.

### <<Option 3-2-1>>

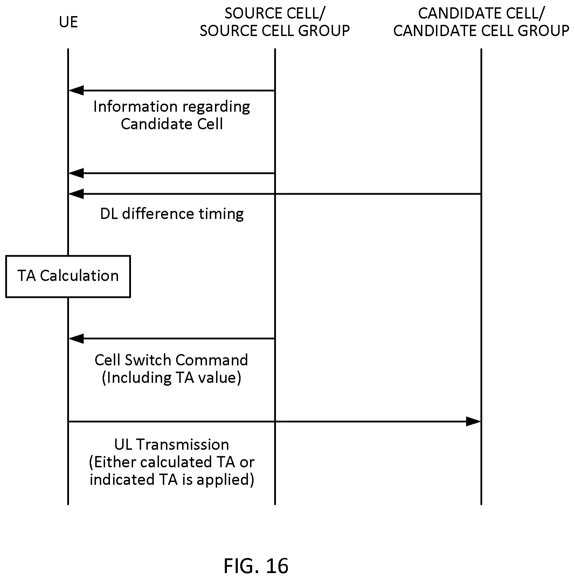

The UE may ignore (or need not consider) a TA value indicated by a cell switch command. In this case, the UE may apply a TA value acquired by UE based TA measurement (see FIG. 16).

### <<Option 3-2-2>>

The UE may apply a TA value indicated by a cell switch command. When the UE has a TA value calculated/acquired by UE based TA measurement, the UE need not apply the calculated acquired TA value.

Alternatively, the UE may apply a TA value indicated by a cell switch command in a certain period from reception of a cell switch command. In other words, in the certain period from the reception of the cell switch command, the UE may apply a TA value acquired in a period other than the certain period, without applying the TA value acquired by UE based TA measurement. In the period other than the certain period, the UE may apply the TA value calculated/acquired by UE based TA measurement. The certain period may be defined in a specification, configured/indicated by the UE by RRC/MAC CE/DCI or may be reported by UE capability information.

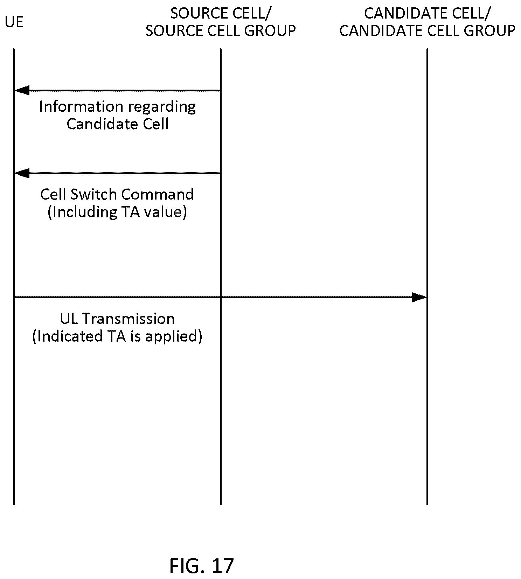

Alternatively, when the UE has not acquired TA for a given candidate cell by UE based TA measurement and has received a cell switch command MAC CE for the given candidate cell (for example, a MAC CE not including any TA value), the UE may apply the TA indicated by the cell switch command. In this case, the UE may control not to perform UE based TA measurement (see FIG. 17). With no need of UE based TA measurement in a case where information regarding TA is included in a cell switch command MAC CE as described above, an increase in load of a UE can be suppressed.

### <<Option 3-2-3>>

When the UE has a TA value indicated by a cell switch command and a TA value acquired by UE based TA measurement, the UE may autonomously determine which of the TA values to select or whether to combine the two TA values (UE implemention).

Note that the third embodiment may be applied to a PDCCH order PRACH as a method of acquiring TA of a candidate cell. In this case, a cell switch command (or a cell switch command MAC CE) may be interpreted as a PDCCH order PRACH (or a TA command, a response signal RAR for the PRACH).

### <Fourth Embodiment>

In a fourth embodiment, an example of a method of applying a TA value acquired by UE based TA measurement will be described.

A TA value acquired by UE based TA measurement may be applied according to at least one of option 4-1 and option 4-2 below.

### {Option 4-1}

The TA value acquired by UE based TA measurement may be used/executed once at the time of initial TA acquisition or at the time or reacquisition of TA when UL asynchronization (for example, UL asyn.) has occurred. After that, TA update may be indicated by a network via a TAC.

The time of initial TA acquisition may be the time of initial UL transmission after a cell switch command, for example. The time when UL asynchronization has occurred may be a case where a time alignment timer (for example, timealignment timer) has expired.

### {Option 4-2}

The TA value acquired by UE based TA measurement may be used/executed when indication is made by a network by a MAC CE/DCI for subsequent UL transmission (for example, follow-up UL TX).

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of UE based TA measurement
- the maximum number of cells/TAGs for which TA measurement/calculation can be performed for each frequency/MCG/SCG/UE
- supporting of UE based TA measurement for synchronized cells/asynchronized cells
- the maximum number of synchronized cells/asynchronized cells to which UE based TA measurement can be applied

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information regarding the above-described embodiment (or performance of the operation of the above-described embodiment) by higher layer signaling/physical layer signaling. For example, the specific information may be information indicating enabling of UE based TA measurement, any RRC parameter for a specific release (for example, Rel. 18/19), or the like.

When the UE does not support at least one of the specific UE capabilities above or is not configured with the specific information, operation of Rel. 15/16 may be applied, for example.

### (Supplementary Notes)

Regarding one embodiment of the present disclosure, the following supplementary notes of the invention will be given.

### {Supplementary Note 1-1}

A terminal including:
a receiving section that receives information regarding a serving cell and a candidate cell; and
a control section that uses, when a plurality of methods of acquiring timing advance corresponding to the candidate cell are supported, a method of acquiring timing advance selected based on at least one of a higher layer parameter and a certain rule, to acquire the timing advance corresponding to the candidate cell.

### {Supplementary Note 1-2}

The terminal according to supplementary note 1-1, wherein, when the timing advance corresponding to the candidate cell is acquired based on a DL signal transmitted from the candidate cell, the control section controls to acquire the timing advance corresponding to the candidate cell, before reception of a cell switch command for the candidate cell or after the reception of the cell switch command for the candidate cell.

### {Supplementary Note 1-3}

The terminal according to supplementary note 1-1 or 1-2, wherein, when a timing advance value is not included in a cell switch command for the candidate cell, the control section applies the timing advance corresponding to the candidate cell acquired based on a DL signal transmitted from the candidate cell.

### {Supplementary Note 1-4}

The terminal according to any one of supplementary notes 1-1 to 1-3, wherein, when the timing advance corresponding to the candidate cell is acquired based on a DL signal transmitted from the candidate cell, the control section applies the acquired timing advance for initial UL transmission for transmitting the candidate cell, after reception of a cell switch command for the candidate cell.

### {Supplementary Note 2-1}

A terminal including:
a receiving section that receives information regarding one or more candidate cells; and
a control section that acquires, based on a difference in reception timing between respective DL signals transmitted from a reference cell and the one or more candidate cells, timing advance corresponding to the candidate cell, wherein
when a plurality of the candidate cells are configured, the reference cell is configured commonly for the plurality of candidate cells or configured for each of the plurality of candidate cells.

### {Supplementary Note 2-2}

The terminal according to supplementary note 2-1, wherein the control section determines whether or not to apply a certain offset in calculation of the timing advance corresponding to the candidate cell, based on whether the reference cell and the candidate cell are synchronized or asynchronized.

### {Supplementary Note 2-3}

The terminal according to supplementary note 2-1 or 2-2, wherein, when cell switching is indicated for a serving cell being the reference cell, the control section does not change the reference cell even after indication of the cell switching.

### {Supplementary Note 2-4}

The terminal according to any one of supplementary notes 2-1 to 2-3, wherein, when cell switching is indicated for a serving cell being the reference cell, the control section changes the reference cell even after indication of the cell switching.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

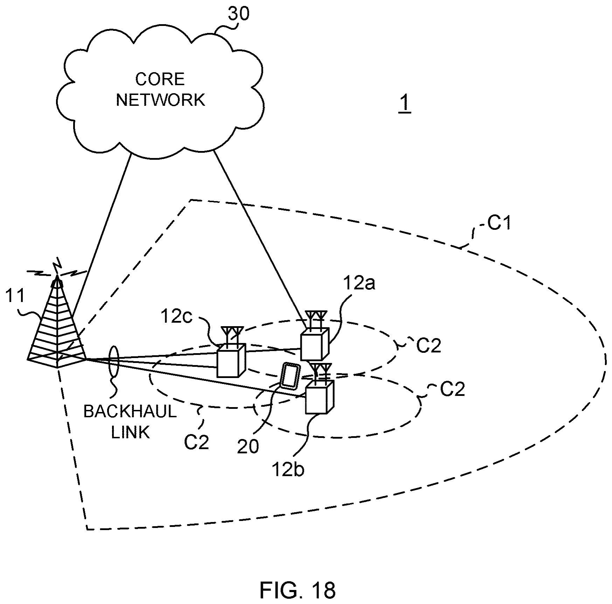

FIG. 18 is a diagram to show an example of a schematic structure of the radio communication system according to one embodiment. A radio communication system 1 (which may be referred to simply as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and operation, administration and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

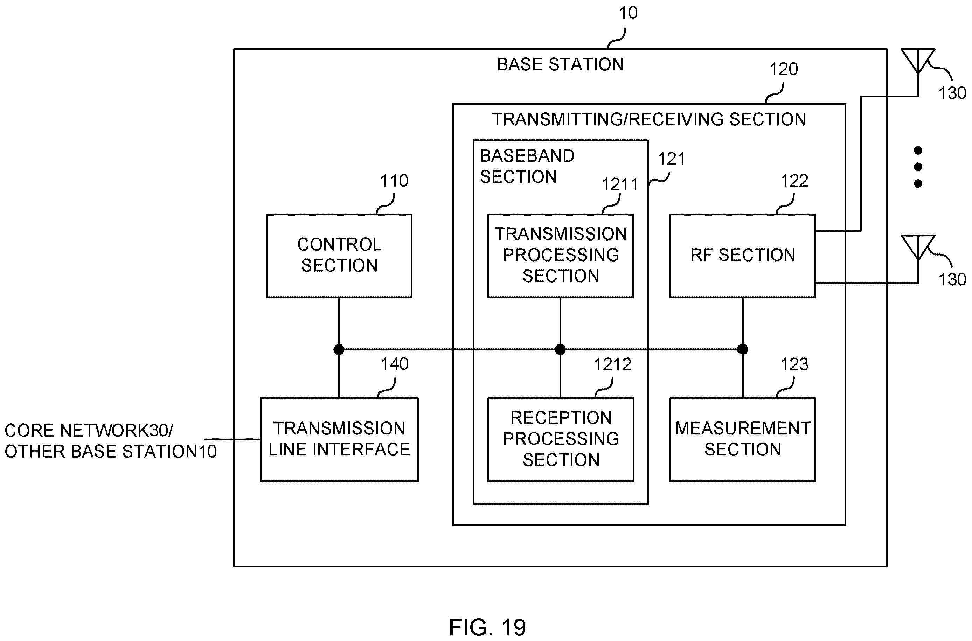

FIG. 19 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus (for example, a network node that provides an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit information regarding a serving cell(s) and information regarding a candidate cell(s). The control section 110 may use, when a plurality of methods of acquiring timing advance corresponding to the candidate cell are supported, a higher layer parameter to indicate a specific method of acquiring timing advance.

The transmitting/receiving section 120 may transmit, to a terminal, information regarding one or more candidate cells. The control section 110 may indicate a reference cell corresponding to the one or more cells, when the terminal acquires, based on a difference in reception timing between respective DL signals transmitted from a reference cell and the one or more candidate cells, timing advance corresponding to the candidate cell.

### (User Terminal)

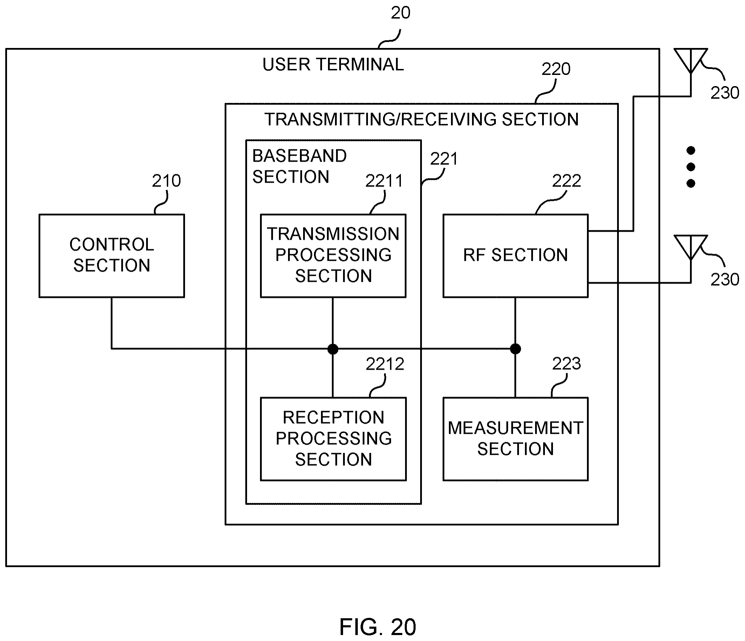

FIG. 20 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI computation, based on a resource for channel measurement. The resource for channel measurement may be a non-zero power (Non Zero Power (NZP)) CSI-RS resource, for example. The measurement section 223 may derive interference measurement for CSI computation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and CSI-IM and a zero power (ZP) CSI-RS may be interchangeably interpreted. Note that, in the present disclosure, a CSI-RS, an NZP CSI-RS, a ZP CSI-RS, a CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information regarding a serving cell(s) and information regarding a candidate cell(s). The control section 210 may use, when a plurality of methods of acquiring timing advance corresponding to the candidate cell are supported, a method of acquiring timing advance selected based on at least one of a higher layer parameter and a certain rule, to acquire the timing advance corresponding to the candidate cell.

When the timing advance corresponding to the candidate cell is acquired based on a DL signal transmitted from the candidate cell, the control section 210 may control to acquire the timing advance corresponding to the candidate cell, before reception of a cell switch command for the candidate cell or after the reception of the cell switch command for the candidate cell. When a timing advance value is not included in a cell switch command for the candidate cell, the control section 210 may apply the timing advance corresponding to the candidate cell acquired based on a DL signal transmitted from the candidate cell. When the timing advance corresponding to the candidate cell is acquired based on a DL signal transmitted from the candidate cell, the control section 210 may apply the acquired timing advance for initial UL transmission for transmitting the candidate cell, after reception of a cell switch command for the candidate cell.

The transmitting/receiving section 220 may receive information regarding one or more candidate cells. The control section 210 may acquire, based on a difference in reception timing between respective DL signals transmitted from a reference cell and the one or more candidate cells, timing advance corresponding to the candidate cell. When a plurality of the candidate cells are configured, the reference cell may be configured commonly for the plurality of candidate cells or may be configured for each of the plurality of candidate cells.

The control section 210 may determine whether or not to apply a certain offset in computation of timing advance corresponding to the candidate cell, based on whether the reference cell and the candidate cell are synchronized or asynchronized. When cell switching is indicated for a serving cell to be the reference cell, the control section 210 may control not change the reference cell even after indication of the cell switching. When cell switching is indicated for a serving cell to be the reference cell, the control section 210 may control to change the reference cell even after indication of the cell switching.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

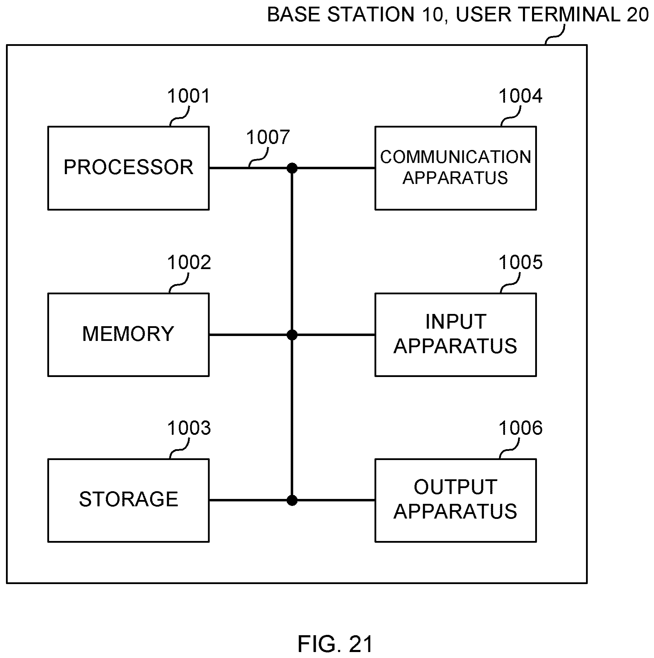

For example, a base station, a user terminal, and so on according to one embodiment of the present disclosure may function as a computer that executes the processes of the radio communication method of the present disclosure. FIG. 21 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

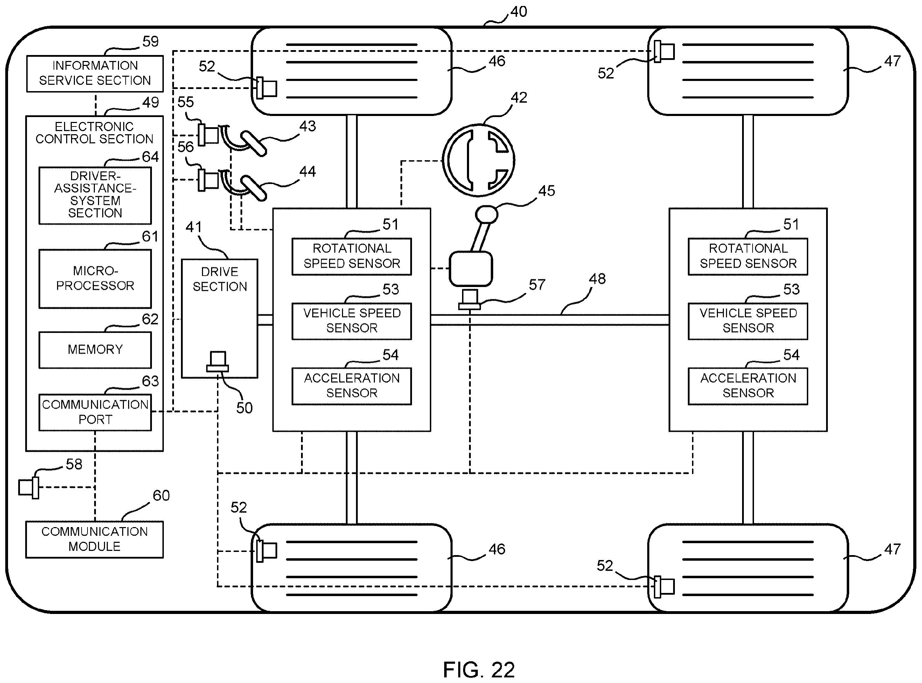

FIG. 22 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives information regarding a serving cell and a candidate cell; and
a control section that uses, when a plurality of methods of acquiring timing advance corresponding to the candidate cell are supported, a method of acquiring timing advance selected based on at least one of a higher layer parameter and a certain rule, to acquire the timing advance corresponding to the candidate cell.

2. The terminal according to claim 1, wherein
when the timing advance corresponding to the candidate cell is acquired based on a DL signal transmitted from the candidate cell, the control section controls to acquire the timing advance corresponding to the candidate cell, before reception of a cell switch command for the candidate cell or after the reception of the cell switch command for the candidate cell.

3. The terminal according to claim 1, wherein
when a timing advance value is not included in a cell switch command for the candidate cell, the control section applies timing advance corresponding to the candidate cell acquired based on a DL signal transmitted from the candidate cell.

4. The terminal according to claim 1, wherein
when the timing advance corresponding to the candidate cell is acquired based on a DL signal transmitted from the candidate cell, the control section applies the acquired timing advance for initial UL transmission for transmitting the candidate cell, after reception of a cell switch command for the candidate cell.

5. A radio communication method for a terminal, comprising:
receiving information regarding a serving cell and a candidate cell; and
using, when a plurality of methods of acquiring timing advance corresponding to the candidate cell are supported, a method of acquiring timing advance selected based on at least one of a higher layer parameter and a certain rule, to acquire the timing advance corresponding to the candidate cell.

6. A terminal comprising:
a transmitting section that transmits information regarding a serving cell and a candidate cell; and
a control section that uses, when a plurality of methods of acquiring timing advance corresponding to the candidate cell are supported, a higher layer parameter to indicate a specific method of acquiring timing advance.
